# EUROPEAN PATENT APPLICATION

(11) **EP 1 580 460 A2**
(43) Date of publication of application: **28.09.2005**
(21) Application number: 05006344.5
(22) Date of filing: 23.03.2005
(51) Int. Cl.: F16H 59/10

(54) **A selector apparatus of an automatic transmission of vehicle**

(30) Priority: 25.03.2004 JP 2004089721
(71) Applicant: KABUSHIKI KAISHA ATSUMITEC, Shizuoka-ken (JP)
(72) Inventor: Suzuki, Takayuki, Hamana-gun Shizuoka-ken (JP)
(74) Representative: Cohausz & Florack

(57) **Abstract**

A selector apparatus of an automatic transmission of vehicle which can achieve both good operability and reduction of size. According to the present invention, there is provided a selector apparatus of an automatic transmission of vehicle comprising: brackets (1a and 1b) to be secured on a body of vehicle; a selector lever (2) pivotally supported on the brackets (1a and 1b); a lever bracket (3) arranged at a base end of the selector lever (2) and formed with sector gear teeth (3a); and a selector-link (4) for actuating a transmission via a wire (W) interposed between the selector-link (4) and the transmission formed with sector gear teeth (4a) mating with the sector gear teeth (3a) of the lever bracket (3) and rotated by the pivotal motion of the selector lever (2) characterized in that: the module of the teeth (3a and 4b) of sector gears of the lever bracket (3) and the selector-link (4) is set within a range 1.0-3.0.

## Description

### Field of the Invention

The present invention relates to a selector apparatus of an automatic transmission of vehicle for carrying out the shifting operation of the transmission by transmitting the pivotal motion of the selector lever to a select-link via a gear arrangement.

### Description of Background Art

In general, a selector apparatus having a selector lever operated by a driver is provided on a vehicle having an automatic transmission and the selector lever can be pivotally moved, for example, to a parking position (P), a reverse position (R), a neutral position (N) and a drive position (D). The base end of the selector lever is provided with a lever bracket which has an aperture for pivotal shaft of the selector lever and is connected to the automatic transmission via a push-pull wire.

Various structures of the selector apparatus have been required to be adapted to many limitations in layout in the interior of vehicle for satisfying desires of users. Accordingly, in Japanese Laid-open Patent Publication No. 315070/1995 there is proposed a selector apparatus provided with a gear arrangement for corresponding the shifting direction of the selector lever and the moving direction of the push-pull wire.

In the selector apparatus of the prior art, a lever bracket is formed with teeth of a sector gear and a select-link is also provided with a sector gear having teeth mating with that of the sector gear of the lever bracket. The select-link is pivotally mounted on a bracket similarly to the selector lever and connected by a push-pull wire extending to an automatic transmission. The transmission can be actuated by a driver operating the selector lever via the sector gear arrangement and the push-pull wire.

However, there is a problem in the selector apparatus of an automatic transmission of vehicle of the prior art in view of the strength of teeth of the sector gear arrangement and operability thereof. That is, it is afraid that the strength of teeth of the sector gear arrangement is reduced if the pitch of teeth is reduced to improve the operability, on the contrary a large play would be caused in the selector apparatus and thus the operability would be deteriorated if the pitch of teeth is increased to increase the strength thereof.

In recently, it is desired in design of the selector apparatus to reduce its size for adapting the selector apparatus to requirements in design of the interior of vehicle. In such a case, it is possible to have high strength of teeth by increasing the face width thereof with keeping the pitch of teeth moderately small to have a good operability. However, increase of the face width would cause increase whole size of the selector apparatus.

### SUMMARY OF THE INVENTION

It is, therefore, an object of the present invention to provide a selector apparatus of an automatic transmission of vehicle which can achieve both good operability and reduction of size without damaging the strength of teeth.

For achieving the object above, there is provided, according to the present invention of claim 1, a selector apparatus of an automatic transmission of vehicle comprising: brackets to be secured on a body of vehicle; a selector lever pivotally supported on the brackets; a lever bracket arranged at a base end of the selector lever and formed with sector gear teeth; and a selector-link for actuating a transmission via a wire interposed between the selector-link and the transmission formed with sector gear teeth mating with the sector gear teeth of the lever bracket and rotated by the pivotal motion of the selector lever characterized in that: the module of the teeth of sector gears of the lever bracket and the selector-link is set within a range 1.0-3.0.

It is preferable, as in claim 2, the axis of the selector lever is arranged substantially normal to its pivotal axis.

It is also preferable, as in claim 3, the axis of the selector lever is arranged within the face width of the teeth of sector gears of the lever bracket and the selector-link.

### Effects of the invention

According to the invention of claim 1, since the module of the teeth of sector gears of the lever bracket and the selector-link is set within a range 1.0-3.0, it is possible to achieve both good operability and reduction of size without damaging the strength of teeth.

According the inventions of claims 2 and 3, since the pivotal motion of the selector lever can be transmitted to the select-link without any deviation, it is possible to prevent partial abrasion of gear teeth and to suppress generation of play in mating of gear teeth. Accordingly, it is possible to further improve the operability of the selector apparatus.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a perspective view showing a selector apparatus of an automatic transmission of vehicle of one preferred embodiment of the present invention;
Fig. 2 is a side elevation view of the selector apparatus of Fig. 1 with one of brackets being removed;
Fig. 3 is a exploded perspective view of the selector apparatus of Fig. 1; and
Fig. 4 is a graph for finding out an optimum module of sector gears (i.e. sector gears consisting of teeth formed on the lever bracket and the select link) used in the selector apparatus of the present invention.

### DESCRIPTION OF THE PREFERRED EMBODIMENTS

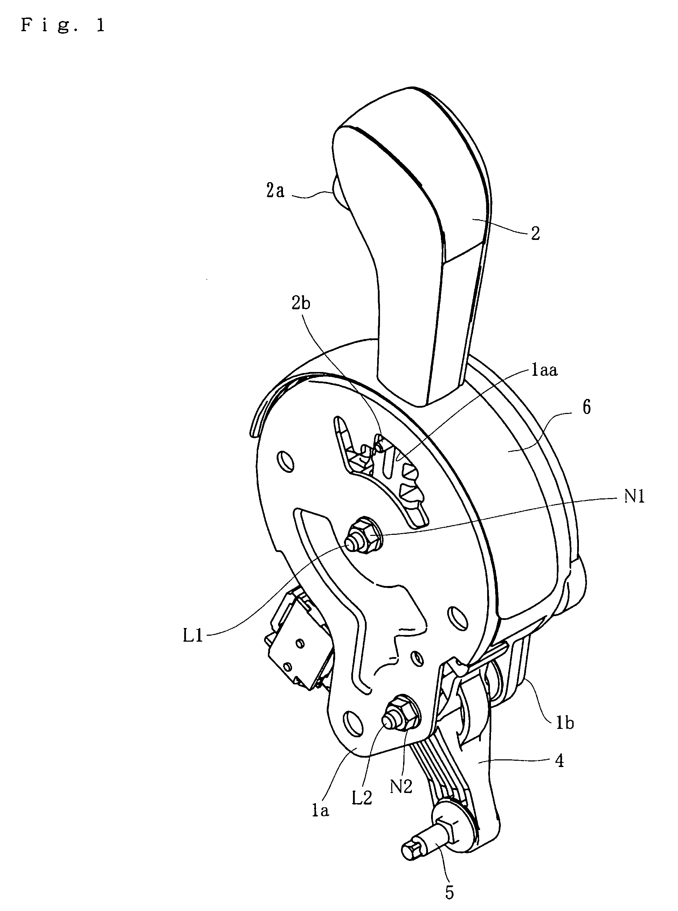

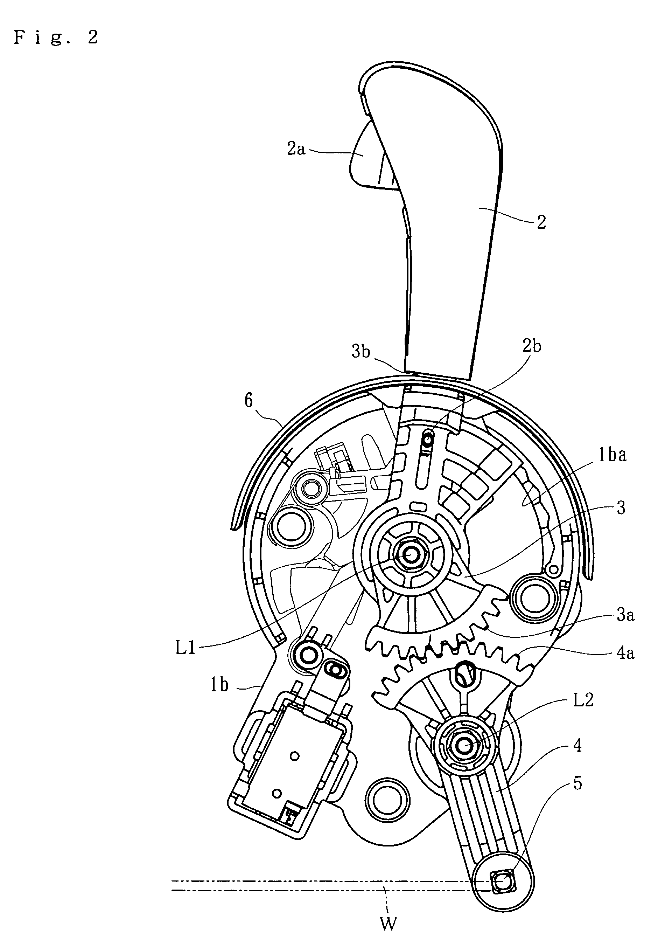

A preferred embodiment of the invention will be described with reference to accompanied drawings.
A selector apparatus of an automatic transmission of vehicle of the present invention is a type which can select any driving position of an automatic transmission by transmitting the pivotal motion of a selector lever to a select-link via sector gears and generally comprises, as shown in Fig. 1, brackets 1a and 1b to be secured on a body of vehicle, a selector lever 2 pivotally supported within the brackets 1a and 1b, a lever bracket 3 (see Fig.2) mounted on the base end of the selector lever 2, and a select-link 4.

The bracket 1a is formed by a metal sheet member and formed with a erroneous operation preventing window 1aa having a configuration according to positions of the selector lever 2 as well as apertures for passing therethrough shafts L1 and L2 respectively of the selector lever 2 and select link 4. The bracket 1a is combined to a bracket 1b to form a box structure of the selector apparatus to be mounted on a body of vehicle.

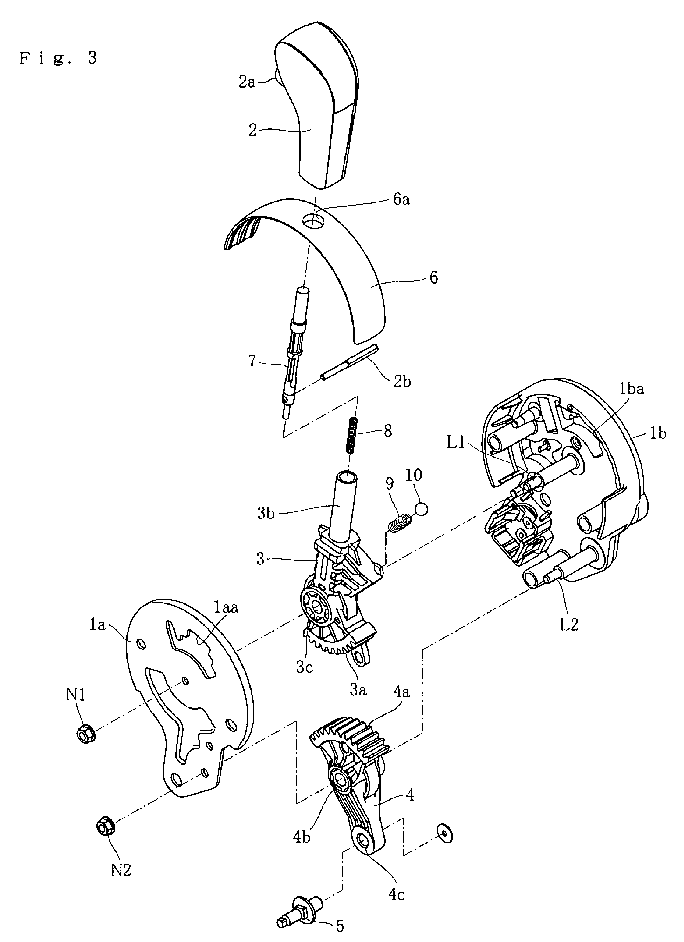

The bracket 1b has shafts L1 and L2 for pivotally supporting the lever bracket 3 and the select-link 4 respectively and is formed with wave-shaped portion 1ba on its upper side wall. A ball 10 (see Fig. 3) supported on the lever bracket 3 via a detent spring 9 abuts on the surface of the wave-shaped portion 1ba to apply "shift-click feeling" of the selector lever 2 to a driver of vehicle. After the lever bracket 3 and the select-link 4 etc. are assembled to the bracket 1b, the bracket 1a is also assembled to the bracket 1b and nuts N1 and N2 are finally screwed onto threads formed on ends of the shafts L1 and L2.

The selector lever 2 pivotally operated by a driver of vehicle has a push knob 2a (see Fig. 2) at its top end and is connected, at its bottom end, to the lever bracket 3 via a lever pipe 3b (see Fig. 3). A rod lock pin 7 is arranged within the lever pipe 3b via a spring 8 and a lock pin 2b engaging said erroneous operation preventing window 1aa is passed through the rod lock pin 7 and the lever bracket 3.

When the selector lever 2 is in the parking position (P), the lock pin 2b engages the erroneous operation preventing window 1aa and prevent the selector lever 2 from being shifted toward the reverse position (R). In such a case, if pushing down the push knob 2a, the rod lock pin 7 is moved downward against a urging force of the spring 8 and thus the locking by the lock pin 2b is released and the selector lever 2 is allowed to be pivoted from the parking position (P) to the reverse position (R).

Similarly, pivotal motion of the selector lever 2 is prevented unless the push knob 2a is pushed down in cases of shifting the selector lever 2 from the reverse position (R) to the parking position (P), from the neutral position (N) to the reverse position (R), and from the drive position (D) to the second speed position (2).

The lever bracket 3 is formed with a bore 3c through which the shaft L1 is passed and also formed with teeth 3a of a sector gear at a position lower than the bore 3c (i.e. shaft L1).

Similarly to the lever bracket 3, the select-link 4 is also formed with a bore 4b through which the shaft L2 is passed and also formed, at its top end, with teeth 4a of a sector gear mating with the teeth 3a of the sector gear of the lever bracket 3. The bottom end of the select-link 4 is formed with a bore 4c through which an end bolt 5 for connecting a push-pull wire W is passed (see Figs. 2 and 3).

The pivotal motion of the selector lever 2 is transmitted to the select-link 4 via the sector gears thereof and thus the automatic transmission is operated via the push-pull wire W. In this case, the direction of the pivotal motion of the selector lever 2 is same as the moving direction of wire W. A reference numeral 6 in Fig. 3 denotes a selector lever cover and the cover 6 moves together with the selector lever 2 passed through an aperture 6a formed substantially at the center of the cover 6a.

In the selector apparatus of the present invention, the module (pitch diameter/number of teeth) of teeth 3a and 4a of the sector gears respectively of the lever bracket 3 and select-link 4 is set within a range 1.0-3.0. Such a setting of module causes following effects.

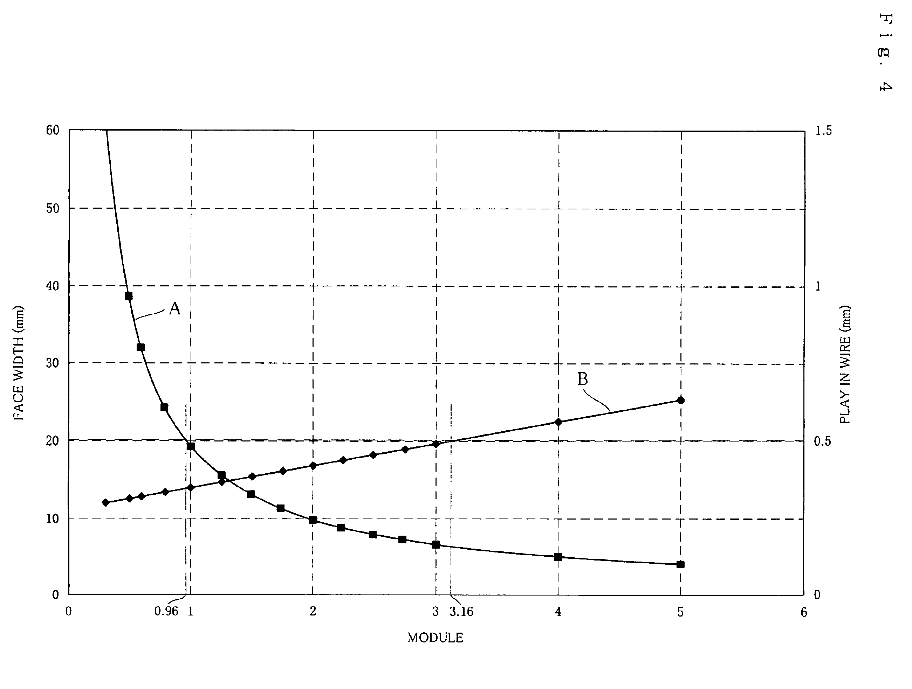

Fig. 4 is a graph showing a curve A of a relation between the face width (mm) of the teeth 3a and 4a satisfying a predetermined condition (ordinate) and the module (abscissa), and a curve B of a relation between the play (mm) in the push-pull wire W (amount of displacement of the wire W when the selector lever 2 is in a stationary condition) (ordinate) and the module (abscissa). Said predetermined condition is the face width of teeth (material: PA6-GF30) which can withstand when load of 100kgf is applied on the wire W which is connected to the end bolt 5 of the apparatus of the automatic transmission under conditions: safety factor 1.5, room temperature and 65% RH.

It has been found that the face width of teeth of the sector gear is preferably about 20 mm for satisfying the requirement of reduction of size of the selector apparatus of today, and the play is preferably about 0.5 mm for achieving the good operability of the selector apparatus. It can be read out from the curve A in the graph of Fig. 4 that the value of module corresponding to the value of face width less than 20 mm is 0.96 or more and that the value module corresponding to the value of play less than 0.5 mm is 3.16 or less.

That is, when the module of the teeth 3a and 4a is set within 0.96-3.16, with more certainty, within 1.0-3.0, it is possible to reduce the face width of teeth less than 20mm with satisfying the strength of teeth as well as to reduce the play of wire W less than 20mm with satisfying good operability of the selector apparatus. In addition, setting of the face width of teeth at an ideal value less than 20 mm makes it possible to reduce the size of box structure of the brackets and thus the size of the selector apparatus.

Furthermore in the preferred embodiment of the present invention, the axis of the selector lever (i.e. the axis of the lever pipe 3b) is arranged substantially normal to its pivotal axis L1 and the axis of the selector lever is positioned within the face width of the teeth 3a and 4a of the lever bracket 3 and select-link 4. Such a arrangement makes it possible to eliminate partial loading in the face width direction of teeth 3a and 4a and accordingly to prevent partial abrasion of the teeth 3a and 4a. Accordingly, this further contributes to reduction of generation of the play and thus to improvement of operability of the selector apparatus.

The present invention has been described with reference to the preferred embodiment. Obviously, modifications and alternations will occur to those of ordinary skill in the art upon reading and understanding the preceding detailed description. For example, the present invention can be applied to those having brackets 1a and 1b or selector lever 2 of different configuration. Of course, the present invention can be also applied to a selector apparatus having any type of parking lock mechanism. Applicability in industry

The present invention can be applied to any selector apparatus having a different outline configuration or additional function so long as it has a module within 1.0-3.0 of teeth of the sector gears.

## Claims

1. A selector apparatus of an automatic transmission of vehicle comprising:
brackets (1a and 1b) to be secured on a body of vehicle;
a selector lever (2) pivotally supported on the brackets (1a and 1b);
a lever bracket (3) arranged at a base end of the selector lever (2) and formed with sector gear teeth (3a); and
a selector-link (4) for actuating a transmission via a wire (W) interposed between the selector-link (4) and the transmission formed with sector gear teeth (4a) mating with the sector gear teeth (3a) of the lever bracket (3) and rotated by the pivotal motion of the selector lever (2) **characterized in that**:
the module of the teeth (3a and 4b) of sector gears of the lever bracket (3) and the selector-link (4) is set within a range 1.0-3.0.

2. A selector apparatus of an automatic transmission of vehicle of claim 1 wherein the axis of the selector lever (2) is arranged substantially normal to its pivotal axis.

3. A selector apparatus of an automatic transmission of vehicle of claim 2 wherein the axis of the selector lever (2) is arranged within the face width of the teeth (3a and 4b) of sector gears of the lever bracket (3) and the selector-link (4).
